# FASCICULE DE BREVET EUROPEEN

(11) **EP 3 769 387 B1**
(45) Date de publication et mention de la délivrance du brevet: **02.03.2022**
(21) Numéro de dépôt: 19721056.0
(22) Date de dépôt: 21.03.2019
(51) Int. Cl.: H02H 3/16, H01G 9/15, H02J 7/34, H01J 43/24

(54) **DISPOSITIF MULTIPLICATEUR D'ÉLECTRONS, ET SYSTÈME DE STOCKAGE CAPACITIF D'ÉNERGIE ÉLECTRIQUE ASSOCIÉ**
ELEKTRONMULTIPLIKATOR UND EIN SYSTEM ZUM KAPAZITIVEN SPEICHERN DER ERZEUGTEN ELEKTRISCHEN ENERGIE
ELECTRON MULTIPLICATION DEVICE AND A SYSTEM FOR CAPACITIVELY STORING THE GENERATED ELECTRIC ENERGY

(30) Priorité: 21.03.2018 FR 1852426
(43) Date de publication de la demande: 27.01.2021
(73) Titulaire: Amimer Energie SpA, 06011 Seddouk (DZ)
(72) Inventeur: GRIBA, Tayeb, Setif (DZ); BOUDIR, Madjid, Bejaia 06001 (DZ); TEMMAR, Abderafik, Blida 09000 (DZ)
(74) Mandataire: Jacobacci Coralis Harle
(86) Numéro de dépôt international: PCT/IB2019/052309
(87) Numéro de publication internationale: WO 2019/180659

(56) Documents cités:
- DE-A1-102007 046 578
- US-A- 5 387 797
- US-A1- 2008 252 266

## Description

### DOMAINE TECHNIQUE AUQUEL SE RAPPORTE L'INVENTION

La présente invention concerne un système de stockage capacitif d'énergie électrique.

Elle concerne également un dispositif multiplicateur d'électrons pour un tel système.

### ARRIERE-PLAN TECHNOLOGIQUE

Le nombre d'appareils électriques utilisés au quotidien augmente de plus en plus, notamment du fait du développement des technologies de l'information.

Les besoins, en termes de fourniture et de distribution d'énergie électrique, sont donc de plus en plus nombreux et variés.

En particulier, il est important de développer des solutions de stockage ou de génération d'énergie électrique pour des utilisateurs ne pouvant se raccorder facilement à un réseau de distribution d'électricité. Pour pouvoir alimenter un ordinateur, un dispositif d'éclairage, ou encore un petit appareil électroménager, il est souhaitable que la source de courant électrique délivre une puissance électrique de l'ordre d'une centaine de watt, et un courant de l'ordre de l'ampère.

Pour ce genre d'application, un stockage d'énergie électrique au moyen de condensateurs de très forte capacité, appelés parfois « super-condensateurs », ou « ultra-condensateurs » parait une solution intéressante. La durée de vie de tels condensateurs est en effet souvent supérieure à celle de batterie électrique au lithium, par exemple.

Parmi les systèmes de stockage capacitif existant, on connait notamment du document US2008252266 un système pour véhicule automobile hybride. Lors d'une phase de freinage en récupération, par exemple, de l'énergie électrique est stockée dans des condensateurs de stockage, pour être restituée ensuite. Dans ce système, il est prévu de maintenir au cours du temps une répartition uniforme des charges électriques entre les différents condensateurs de stockage. Le système comprend pour cela des interrupteurs commandés et des condensateurs de transfert, qui permettent, lorsque l'un des condensateurs de stockage est plus chargé qu'un autre, de transférer des charges électriques de l'un à l'autre.

Le document DE 10 2007 046578 décrit la structure d'un capacitance électrolyte qui est rempli avec un matériel avec un revêtement de par exemple rhodium.

Le document US-5.387.797 décrit un détecteur de photon qui a un revêtement de par exemple rhodium.

Par rapport à une batterie d'accumulateurs, ce système permet d'emmagasiner ou de restituer une énergie électrique en des temps très courts.

En revanche il n'est pas adapté pour délivrer un courant électrique pendant des durées importantes, de l'ordre du jour ou plus.

### OBJET DE L'INVENTION

Dans ce contexte, l'invention propose un dispositif multiplicateur d'électrons, apte à être intégré dans un système de stockage capacitif d'énergie électrique pour multiplier une charge électrique transférée entre des condensateurs de ce système. Un tel dispositif multiplicateur d'électrons doit donc être apte, entre autres, à délivrer un courant de l'ordre de l'ampère, et à fonctionner en régime de courant électrique continu.

L'invention propose aussi un système de stockage d'énergie électrique comprenant au moins deux condensateurs, dans lequel une charge électrique transférée de l'un de ces condensateurs à l'autre, est multipliée par un tel dispositif multiplicateur d'électrons lors de son transfert.

Cette multiplication permet de compenser les différentes causes de baisse de charge électrique dans le système, grâce à quoi le système peut délivrer un courant électrique de l'ordre de l'ampère pendant des durées importantes, de l'ordre du jour ou plus.

Plus particulièrement, on propose selon l'invention un dispositif multiplicateur d'électrons qui comprend :
- un bloc de rhodium, traversé par un canal qui s'étend, le long d'une ligne moyenne, depuis une ouverture d'entrée dans le canal jusqu'à une ouverture de sortie du canal,
- un conducteur électrique d'entrée, en contact avec le bloc de rhodium sur une partie au moins du périmètre de l'ouverture d'entrée,
- un conducteur électrique de sortie, en contact avec le bloc de rhodium sur une partie au moins du périmètre de l'ouverture de sortie, et
- une source de champ magnétique configurée pour générer, dans le canal, un champ magnétique, variable au cours du temps, dirigé parallèlement à la ligne moyenne du canal, orienté de l'ouverture d'entrée vers l'ouverture de sortie du canal.

Le déposant a constaté que cette structure permet de délivrer, au niveau du conducteur électrique de sortie, un courant électrique de sortie dont l'intensité est supérieure à celle d'un courant électrique d'entrée, reçu par le conducteur électrique d'entrée.

Le déposant a constaté plus précisément que l'intensité du courant électrique de sortie pouvait être jusqu'à 3 fois supérieure à celle du courant électrique d'entrée.

Des tests ont montré que cette amplification du courant électrique d'entrée était obtenue notamment, en régime de courant continu, pour des tensions électriques d'entrée et de sortie comprises entre 10 volts et 24 volts environ, et pour une intensité du courant électrique d'entrée comprise entre 1 et 6 ampères environ.

La tension électrique d'entrée du dispositif est la différence de potentiel électrique entre le conducteur électrique d'entrée et une masse électrique du dispositif, tandis que la tension électrique de sortie est la différence de potentiel électrique entre le conducteur électrique de sortie et cette masse électrique.

Cette plage de fonctionnement est compatible notamment avec les exigences d'un système de stockage capacitif destiné à fournir de l'énergie électrique à usage domestique.

On notera en particulier que ce dispositif est apte à amplifier des courants électriques dont l'intensité est de l'ordre de l'ampère sans que cela ne le détériore.

A titre de comparaison, des tubes multiplicateurs d'électrons classiques, comprenant une série de dynodes placées sous vide et alimentées par des tensions accélératrices de l'ordre d'une centaine de volts, ne peuvent généralement délivrer que des courants électriques dont l'intensité est de l'ordre, au plus, du milliampère.

Il est prévu, de préférence, que la source de champ magnétique soit configurée de manière à ce que le champ magnétique généré dans le canal varie au cours du temps en présentant une succession d'impulsions, séparées deux à deux par une période temporelle comprise entre 5 et 10 millisecondes, la durée de chaque impulsion étant inférieure à un dixième de ladite période, la valeur moyenne au cours du temps dudit champ magnétique étant comprise entre 17 microteslas et 18 microteslas.

Le déposant a constaté que ce type de variations temporelles du champ magnétique conduisait à une amplification efficace du courant électrique, d'un facteur 3 environ.

Pour ces valeurs moyennes du champ magnétique, les diamètres du canal appropriés pour obtenir cette amplification du courant électrique sont de l'ordre du millimètre.

Il est d'ailleurs prévu, de manière non limitative, que le canal soit cylindrique, de diamètre inférieur à 1 millimètres, préférentiellement compris entre 0,8 millimètre et 1 millimètre.

Lorsque le diamètre du canal est ainsi de l'ordre du millimètre, on peut prévoir que les connecteurs d'entrée et de sortie, qui sont de préférence enfichés directement dans les ouvertures d'entrée et de sortie, présentent également des diamètres de l'ordre du millimètre, ce qui leur permet avantageusement de transporter des courants électriques de l'ordre de l'ampère sans se détériorer.

En outre, un canal dont le diamètre est de l'ordre du millimètre est commode à réaliser.

Il est prévu aussi que la longueur du canal, entre son ouverture d'entrée et son ouverture de sortie, soit comprise entre 10 et 15 millimètres.

Selon une autre caractéristique non limitative, le bloc de rhodium est en forme de cube, et la ligne moyenne du canal s'étend perpendiculairement à une face du cube.

On peut prévoir aussi que la source de champ magnétique comprenne au moins une bobine, connectée électriquement :
- en entrée, au conducteur électrique d'entrée, et
- en sortie, à la masse électrique du dispositif multiplicateur d'électrons.

Ainsi, la source de courant qui fournit le courant électrique d'entrée du dispositif multiplicateur d'électrons alimente également la ou les bobines de ce dispositif.

Cette solution est avantageusement simple, par rapport à une solution dans laquelle une alimentation électrique séparée serait dédiée spécifiquement à l'alimentation de la source de champ magnétique. En outre, la source de champ magnétique est alors alimentée électriquement seulement lorsqu'un courant à amplifier entre dans le dispositif multiplicateur d'électrons, ce qui optimise la consommation énergétique de la source de champ magnétique.

Comme déjà indiqué, l'invention propose aussi un système de stockage capacitif d'énergie électrique.

Ce système comprend :
- un premier ensemble de stockage capacitif comprenant au moins un condensateur,
- un deuxième ensemble de stockage capacitif comprenant au moins un autre condensateur, et
- une borne de sortie pour délivrer un courant électrique de sortie.

Selon l'invention, le système de stockage comprend en outre un dispositif multiplicateur d'électrons tel que décrit ci-dessus, et, dans une première configuration du système de stockage :
- le deuxième ensemble de stockage est connecté à la borne de sortie du système de stockage,
- le premier ensemble de stockage est connecté au conducteur électrique d'entrée du dispositif multiplicateur d'électrons, et
- le conducteur électrique de sortie est connecté au dispositif multiplicateur d'électrons au deuxième ensemble de stockage.

Dans cette première configuration, le courant électrique de sortie délivré par le système de stockage est donc fourni par le deuxième ensemble de stockage.

Le deuxième ensemble de stockage débite ainsi une certaine quantité de charges électriques. Mais en contrepartie, le premier ensemble de stockage charge le deuxième ensemble par l'intermédiaire du dispositif multiplicateur d'électrons, ce qui permet de maintenir au moins en partie le niveau de charge du deuxième ensemble de stockage.

Par rapport à l'art antérieur précité, le fait de multiplier des charges électriques lors de leur transfert, du premier ensemble de stockage vers le deuxième ensemble de stockage, permet de maintenir (voire éventuellement d'augmenter) le niveau de charge du deuxième ensemble de stockage (qui débite le courant électrique de sortie), tout en ne faisant diminuer que très légèrement le niveau de charge du premier ensemble de stockage.

Le système de stockage comprend par ailleurs, de préférence, un système de commutation configuré pour connecter les premier et deuxième ensembles de stockage alternativement dans la première configuration et dans une deuxième configuration dans laquelle :
- le premier ensemble de stockage est connecté à la borne de sortie du système de stockage,
- le deuxième ensemble de stockage est connecté au conducteur électrique d'entrée du dispositif multiplicateur d'électrons, et
- le conducteur électrique de sortie du dispositif multiplicateur d'électrons est connecté au premier ensemble de stockage.

Ainsi, dans cette deuxième configuration, le courant électrique de sortie est fourni par le premier ensemble de stockage, et, dans le même temps, le deuxième ensemble de stockage maintient au moins en partie le niveau de charge du premier ensemble en le chargeant par l'intermédiaire du dispositif multiplicateur d'électrons.

Alterner ainsi les première et deuxième configurations permet, pour chaque ensemble de stockage, de maintenir, en moyenne au cours du temps, son niveau de charge.

Le niveau de charge de chaque ensemble de stockage peut ainsi être maintenu pendant des durées importantes, de l'ordre du jour ou plus.

Le déposant a constaté plus précisément que, lorsque les condensateurs des ensembles de stockage présentent une capacité appropriée, le système de stockage est apte à délivrer un courant électrique d'intensité supérieure à 1 ampère, en régime de courant continu, pour une tension électrique de sortie de 12 volts ou 24 volts (entre la borne de sortie et une masse électrique du système de stockage), et cela pendant plusieurs jours d'affilé.

D'autres caractéristiques non limitatives et avantageuses du système de stockage conforme à l'invention, prises individuellement ou selon toutes les combinaisons techniquement possibles, sont les suivantes :
- le premier ensemble de stockage comprend :
   - un premier condensateur principal comportant une borne positive et une borne négative qui est reliée à une masse électrique du système de stockage, et
   - un premier condensateur auxiliaire, comportant une borne positive et une borne négative qui est reliée à la masse électrique, une armature du premier condensateur auxiliaire étant en influence électrostatique avec une armature du premier condensateur principal ;
- le deuxième ensemble de stockage comprend :
   - un deuxième condensateur principal comportant une borne positive
   et une borne négative qui est reliée à la masse électrique, et
   - un deuxième condensateur auxiliaire, comportant une borne positive et une borne négative qui est reliée à la masse électrique, une armature du deuxième condensateur auxiliaire étant en influence électrostatique avec une armature du deuxième condensateur principal ;
- dans la première configuration du système de stockage :
   - la borne positive du deuxième condensateur principal est connectée à la borne de sortie du système de stockage,
   - la borne positive du premier condensateur principal est connectée au conducteur électrique d'entrée du dispositif multiplicateur d'électrons, et
   - le conducteur électrique de sortie du dispositif multiplicateur d'électrons est connecté à la borne positive du deuxième condensateur auxiliaire ;
- dans la deuxième configuration du système de stockage :
   - la borne positive du premier condensateur principal est connectée à la borne de sortie du système de stockage,
   - la borne positive du deuxième condensateur principal est connectée au conducteur électrique d'entrée du dispositif multiplicateur d'électrons, et
   - le conducteur électrique de sortie du dispositif multiplicateur d'électrons est connecté à la borne positive du premier condensateur auxiliaire ;
- le système de commutation est configuré pour basculer de la première configuration à la deuxième configuration lorsqu'une tension électrique entre la borne positive et la borne négative du deuxième condensateur principal devient inférieure à une tension de seuil prédéterminée ;
- le système de commutation est configuré pour basculer de la première configuration à la deuxième configuration lorsque l'intensité d'un courant électrique débité par la borne positive du deuxième condensateur principal devient inférieure à une intensité seuil prédéterminée ;
- le système de commutation est configuré pour basculer de la deuxième configuration à la première configuration lorsqu'une tension électrique entre la borne positive et la borne négative du premier condensateur principal devient inférieure à une tension de seuil prédéterminée ;
- le système de commutation est configuré pour de la deuxième configuration à la première configuration lorsque l'intensité d'un courant électrique débité par la borne positive du premier condensateur principal devient inférieure à une intensité seuil prédéterminée ;
- le premier condensateur principal et le deuxième condensateur principal présentent chacun une capacité comprise entre 0,15 et 0,25 kilofarad ;
- le premier condensateur auxiliaire présente une capacité comprise entre un tiers et la moitié de la capacité du premier condensateur principal ;
- le deuxième condensateur auxiliaire présente une capacité comprise entre un tiers et la moitié de la capacité du deuxième condensateur principal ;
- le système de stockage comprend en outre un condensateur de stockage qui comporte une borne positive et une borne négative reliées respectivement à la borne de sortie et à la masse électrique du système de stockage, le condensateur de stockage présentant une capacité qui est supérieure ou égale à la somme de la capacité du premier condensateur principal et de la capacité du premier condensateur auxiliaire ;
- le condensateur de stockage présente une capacité supérieure ou égale à la somme de la capacité du deuxième condensateur principal et de la capacité du deuxième condensateur auxiliaire ;
- le condensateur de stockage présente une capacité comprise entre 0,3 et 0,35 kilofarad ;
- dans la première configuration du système de stockage, la borne positive du condensateur de stockage est connectée à la borne positive du premier condensateur auxiliaire de manière à autoriser un transfert de charges électriques du condensateur de stockage vers le premier condensateur auxiliaire ;
- dans la deuxième configuration du système de stockage, la borne positive du condensateur de stockage est connectée à la borne positive du deuxième condensateur auxiliaire pour autoriser un transfert de charges électriques du condensateur de stockage vers le deuxième condensateur auxiliaire ;
- l'armature du premier condensateur auxiliaire qui est en influence électrostatique avec l'une des armatures du premier condensateur principal est au contact de cette armature du premier condensateur principal par l'intermédiaire d'une couche d'électrolyte ;
- le premier condensateur auxiliaire et le premier condensateur principal forment respectivement deux éléments distincts, appliqués l'un contre l'autre le long d'une surface de contact.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement, en coupe, un dispositif multiplicateur d'électrons mettant en oeuvre les enseignements de l'invention,
- la figure 2 représente schématiquement une partie du dispositif de la figure 1, vu en perspective,
- la figure 3 représente le dispositif de la figure 1 sous la forme d'un schéma électrique simplifié,
- la figure 4 représente schématiquement les principaux éléments d'un système de stockage capacitif muni du dispositif multiplicateur d'électrons de la figure 1,
- la figure 5 représente schématiquement les connections électriques entre les éléments du système de la figure 4, au cours d'une première étape de fonctionnement,
- la figure 6 représente schématiquement les connections électriques entre les éléments du système de la figure 4, au cours d'une deuxième étape de fonctionnement,
- la figure 7 représente schématiquement une partie de la structure d'un condensateur principal du système de stockage de la figure 4,
- la figure 8 représente schématiquement une partie de la structure d'un condensateur auxiliaire du système de stockage de la figure 4,
- la figure 9 représente schématiquement, en éclaté, un ensemble de stockage du système de la figure 4, comprenant le condensateur principal et le condensateur auxiliaire des figures 7 et 8, et
- la figure 10 représente schématiquement une partie de la structure d'un condensateur de stockage du système de stockage de la figure 4.

### Dispositif multiplicateur d'électrons

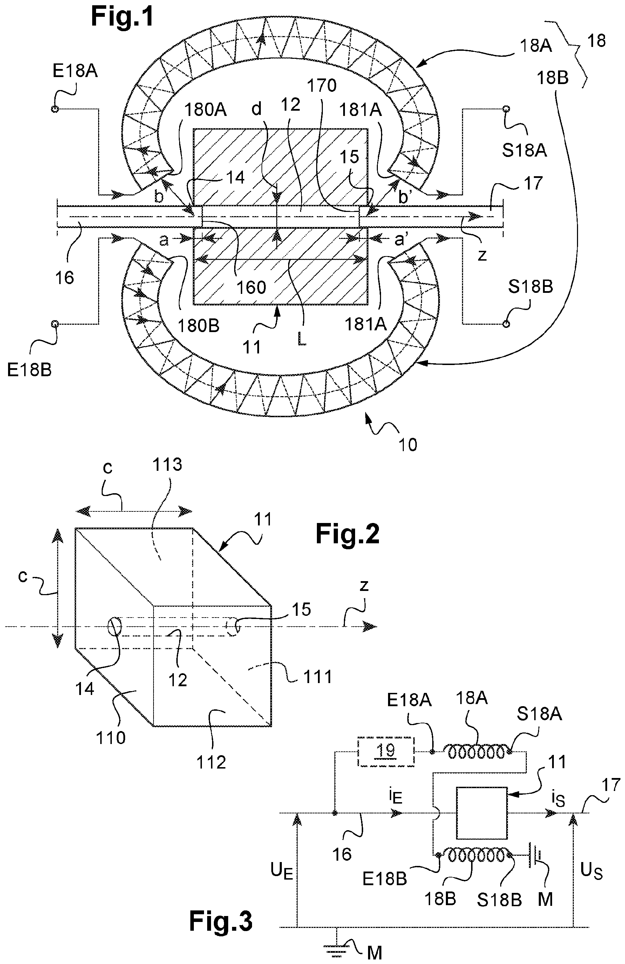

La figure 1 représente schématiquement les principaux éléments d'un dispositif 10 multiplicateur d'électrons.

De manière remarquable, ce dispositif 10 comprend un bloc de rhodium 11 traversé de part en part par un canal 12, et raccordé :
- au niveau d'une ouverture d'entrée 14 du canal, à un conducteur électrique d'entrée 16, et
- au niveau d'une ouverture de sortie 15 du canal, à un conducteur électrique de sortie 17.

Un courant électrique d'entrée i_{E} est reçu par le conducteur électrique d'entrée 16, tandis qu'un courant électrique de sortie iₛ (supérieur à celui d'entrée) est délivré par le conducteur électrique de sortie 17.

Dans le mode de réalisation décrit ici, le bloc de rhodium 11 est en forme de cube (figure 2). Le côté c de ce cube est compris entre 10 et 15 millimètres, préférentiellement égal à 10 millimètres.

Le canal 12 est rectiligne (la ligne moyenne le long de laquelle s'étend le canal est donc rectiligne).

Le canal 12 est plus précisément cylindrique, et présente donc une section droite circulaire. Le diamètre d du canal 12 est inférieur à 1 millimètre, et est compris de préférence entre 0,8 et 1 millimètre.

L'ouverture d'entrée du canal 14 est située sur une première face 110 du cube, et son ouverture de sortie 15 est située sur une deuxième face 111 de ce cube, opposée à la première face par rapport au centre du cube.

L'axe z sur lequel est centré le canal 12 s'étend ici perpendiculairement aux première et deuxième faces 110, 111 du cube.

La longueur L du canal 12, entre son ouverture d'entrée 14 et son ouverture de sortie 15 est donc égale au côté c du cube formé par le bloc de rhodium 11.

L'axe z passe approximativement par le centre de ce cube.

Sur la figure 1, le dispositif 10 est vu en coupe selon un plan de coupe qui comprend l'axe z et qui est parallèle à des faces latérales 112, 113 du cube.

Les conducteurs électriques d'entrée et de sortie, 16 et 17, sont réalisés chacun au moyen d'un fil métallique cylindrique, par exemple en cuivre, de diamètre égal ou légèrement supérieur au diamètre d du canal 12.

Le conducteur électrique d'entrée 16 est enfoncé dans le canal 12 à travers l'ouverture d'entrée 14 (qui est circulaire), tandis que le conducteur électrique de sortie 17 est enfoncé dans le canal 12 à travers l'ouverture de sortie 15. Chacun de ces conducteurs est ainsi directement en contact avec le bloc de rhodium 11.

Le conducteur électrique d'entrée 16, de même que le conducteur électrique de sortie 17, est engagé dans le canal sur une faible distance. La distance a entre, d'une part, la première face 110 du cube, et d'autre part, la face d'extrémité 160 du conducteur électrique d'entrée 16 située dans le canal, est comprise par exemple entre 0,15 millimètre et 1,5 millimètre. De même, la distance a' entre, d'une part, la deuxième face 111 du cube et, d'autre part, la face d'extrémité 170 du conducteur électrique de sortie 17 située dans le canal, peut être comprise entre 0,15 millimètre et 1,5 millimètre.

Le canal 12 est rempli d'air à la pression atmosphérique.

Le dispositif 10 multiplicateur d'électrons comprend en outre une source de champ magnétique 18 configurée pour générer, dans le canal 12, un champ magnétique dirigé parallèlement à l'axe z du canal et orienté de l'ouverture d'entrée 14 vers l'ouverture de sortie 15 du canal.

La source de champ magnétique 18 est configurée plus précisément de manière à ce que le champ magnétique généré dans le canal présente une amplitude qui varie au cours du temps de manière périodique, avec une période comprise entre 5 et 10 millisecondes.

Le champ magnétique généré est un champ qui s'ajoute à un éventuel champ magnétique environnant, qui pourrait être présent en l'absence du dispositif multiplicateur d'électrons, tel que le champ magnétique terrestre.

Ici, le champ magnétique généré par ladite source présente plus précisément, au cours de chaque période, une impulsion de grande amplitude, suivie d'un intervalle temporel, ici plus long que l'impulsion elle-même, pendant lequel le champ magnétique est quasiment nul (pendant cet intervalle temporel, le champ magnétique est par exemple inférieur à un dixième de sa valeur moyenne au cours du temps).

Ici, la durée de chaque impulsion (qui correspond par exemple à sa largeur temporelle à mi-hauteur) est courte par rapport à la période qui sépare deux impulsions successives. Cette durée est plus précisément inférieure à un dixième de ladite période.

Par ailleurs, la valeur moyenne au cours du temps de l'amplitude du champ magnétique est comprise entre 17 microteslas et 18 microteslas (la valeur maximale présentée par ce champ magnétique, à chaque impulsion, est ici nettement plus élevée que cette valeur moyenne).

La source de champ magnétique 18 est réalisée ici au moyen notamment de deux bobines 18A et 18B.

Chacune de ces bobines 18A, 18B présente ici globalement la forme d'une anse de panier. Chaque bobine 18A, 18B s'étend plus précisément le long d'un arc, courbe, depuis une première face 180A, 180B jusqu'à une deuxième face 181A, 181B. La première face 180A, 180B est située à proximité de l'ouverture d'entrée 14 du canal, à une distance b de cette ouverture 14 inférieure à un tiers du côté c du cube de rhodium. De manière comparable, la deuxième face 181A, 181B de la bobine 18A, 18B est située à une distance b' de l'ouverture de sortie 15, inférieure à un tiers du côté c de ce cube. Entre sa première face 180A, 180B et sa deuxième face 181A, 181B, la bobine 18A, 18B s'étend de manière à contourner le bloc de rhodium 11.

Les première et deuxième faces de chaque bobine correspondent respectivement à la première et à la dernière spire de cette bobine.

Chaque bobine 18A, 18B présente ici une section droite qui est circulaire. Elle est réalisée par exemple en enroulant un fil conducteur autour d'un support en matériau non magnétique résistant à la chaleur, tel que du téflon.

Les deux bobines 18A, 18B sont disposées de manière symétrique de part et d'autre de l'axe z. Chacune de ces bobines 18A, 18B, lorsqu'elle est alimentée électriquement, génère dans le canal 12 un champ magnétique dirigé essentiellement de l'ouverture d'entrée 14 vers l'ouverture de sortie 15.

Le nombre de spires des bobines est ajusté de manière à ce que le champ magnétique généré dans le canal 12 présente les valeurs indiquées plus haut.

A titre d'exemple, les bobines 18A, 18B comprennent ici entre 15 et 20 spires chacune.

Chaque bobine 18A, 18B comprend une borne d'entrée E18A, E18B et une borne de sortie S18A, S18B, raccordées comme expliqué ci-dessous en référence à la figure 3.

Comme le montre cette figure ces deux bobines 18A, 18B sont connectées en série l'une avec l'autre, entre le conducteur d'entrée 16 du dispositif multiplicateur d'électrons et une masse électrique M de ce dispositif.

Plus précisément :
- la borne d'entrée E18A de la première bobine 18A est raccordée au conducteur électrique d'entrée 16 par l'intermédiaire d'un système de découpage 19,
- la borne de sortie S18A de la première bobine 18A est raccordée à la borne d'entrée E18B de la deuxième bobine 18B, et
- la borne de sortie S18B de la deuxième bobine 18B est raccordée à une masse électrique M du dispositif 10 multiplicateur d'électrons.

Le système de découpage 19 est configuré de manière à ce que le courant électrique qui traverse les bobines varie au cours du temps comme indiqué plus haut pour le champ magnétique généré. Le système de découpage peut par exemple être réalisé au moyen d'un transistor et d'un condensateur agencés pour que, dans un état bloqué du transistor, le condensateur se charge, et, dans un état passant du transistor, le condensateur se décharge dans les bobines 18A, 18B. Le transistor est alors commandé de manière périodique, de manière à passer alternativement de son état bloqué à son état passant avec une période égale à celle des variations du champ magnétique généré décrites plus haut.

Comme déjà indiqué, le courant électrique d'entrée i_{E} du dispositif 10 est reçu par le conducteur électrique d'entrée 16, tandis que son courant électrique de sortie iₛ est délivré par le conducteur électrique de sortie 17.

La tension électrique d'entrée U_{E} du dispositif est égale à la différence de potentiel électrique entre le conducteur électrique d'entrée 16 et la masse électrique M, tandis que la tension électrique de sortie Us est égale à la différence de potentiel électrique entre le conducteur électrique de sortie 17 et cette masse électrique M.

Des caractéristiques de fonctionnement du dispositif 10 sont données ci-dessous, à titre d'exemple, dans le cas d'un canal de 10 millimètre de long et de 1 millimètre de diamètre, et pour un champ magnétique dans le canal 12 dont la valeur moyenne au cours du temps est de 17 à 18 microteslas.

Lorsque le dispositif 10 ainsi dimensionné est alimenté par une tension électrique d'entrée U_{E} continue de 12 volts environ, et par un courant électrique d'entrée i_{E} dont l'intensité, continue, est égale à 0,4 Ampère environ, on constate que la tension électrique de sortie Uₛ est égale, elle aussi, à 28 volts environ, tandis que le courant électrique de sortie iₛ présente une intensité de 1,2 Ampère environ.

Plus généralement, pour des valeurs de la tension électrique d'entrée comprises entre 1 volts et une vingtaine de volts, l'intensité du courant électrique de sortie est, pour l'exemple décrit ci-dessus, égale à environ 3 fois celle du courant électrique d'entrée.

Le courant électrique qui traverse le dispositif multiplicateur d'électrons est donc amplifié (le nombre d'électrons qui entrent dans le dispositif est donc multiplié, pour obtenir le nombre d'électrons qui en sortent).

### Système de stockage capacitif d'énergie électrique

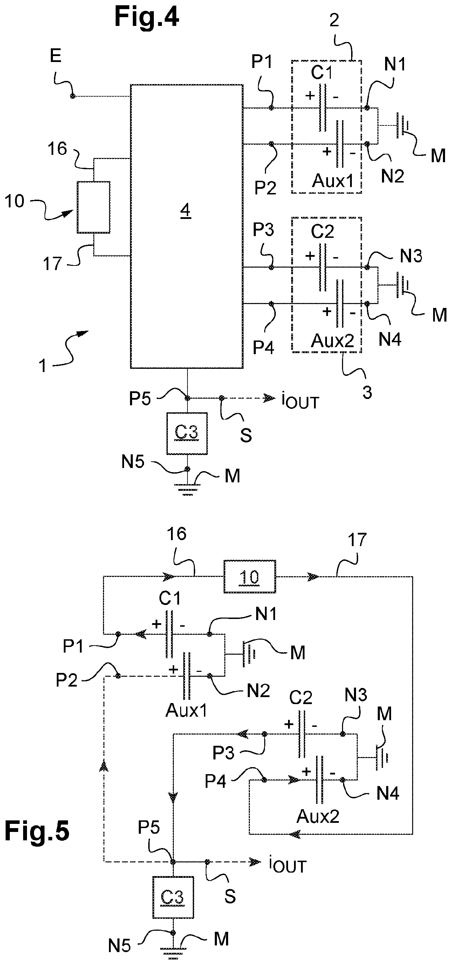

L'invention concerne également un système de stockage 1 comprenant (figure 4) :
- un premier ensemble de stockage 2 capacitif,
- un deuxième ensemble de stockage 3 capacitif,
- un condensateur de stockage C3,
- un système de commutation 4 pour piloter des échanges de charges électriques entre le premier ensemble de stockage 2, le deuxième ensemble de stockage 3, et le condensateur de stockage C3, et, de manière remarquable,
- un dispositif multiplicateur d'électrons.

Le dispositif multiplicateur d'électrons est apte, en régime de courant électrique continu, à délivrer un courant de l'ordre de l'ampère, pour une tension électrique d'entrée comprise entre 10 et 24 volts, son gain en courant étant supérieur à 2, préférentiellement égal à 3 environ.

Le dispositif multiplicateur d'électrons du système de stockage 1 capacitif est réalisé sous la forme du dispositif 10 multiplicateur d'électrons qui a été décrit en détail plus haut en référence aux figures 1 à 3.

Le système de stockage 1 comprend également :
- une masse électrique M,
- une borne de sortie S pour délivrer un courant électrique de sortie i_{OUT}, et
- une borne d'entrée E à laquelle est connectée une alimentation externe lors d'une phase initiale de chargement du système de stockage 1.

Le premier ensemble de stockage 2 comprend un premier condensateur principal C1 et un premier condensateur auxiliaire Aux1 qui comportent chacun une borne positive P1, P2, et une borne négative N1, N2.

Les bornes négatives N1 et N2 sont connectées à la masse électrique M.

L'armature positive du premier condensateur auxiliaire Aux1 (armature connectée à la borne positive P2) est en influence électrostatique avec l'armature négative du premier condensateur principal C1 (armature connectée à la borne négative N1).

La structure du deuxième ensemble de stockage 3 est similaire à celle du premier ensemble. Plus précisément, le deuxième ensemble de stockage 3 comprend un deuxième condensateur principal C2 et un deuxième condensateur auxiliaire Aux2. Ces deux condensateurs comportent chacun une borne positive P3, P4, et une borne négative N3, N4. Ces bornes négatives N3 et N4 sont connectées à la masse électrique M. En outre, l'armature positive du deuxième condensateur auxiliaire Aux2 est, comme précédemment, en influence électrostatique avec l'armature négative du deuxième condensateur principal C2.

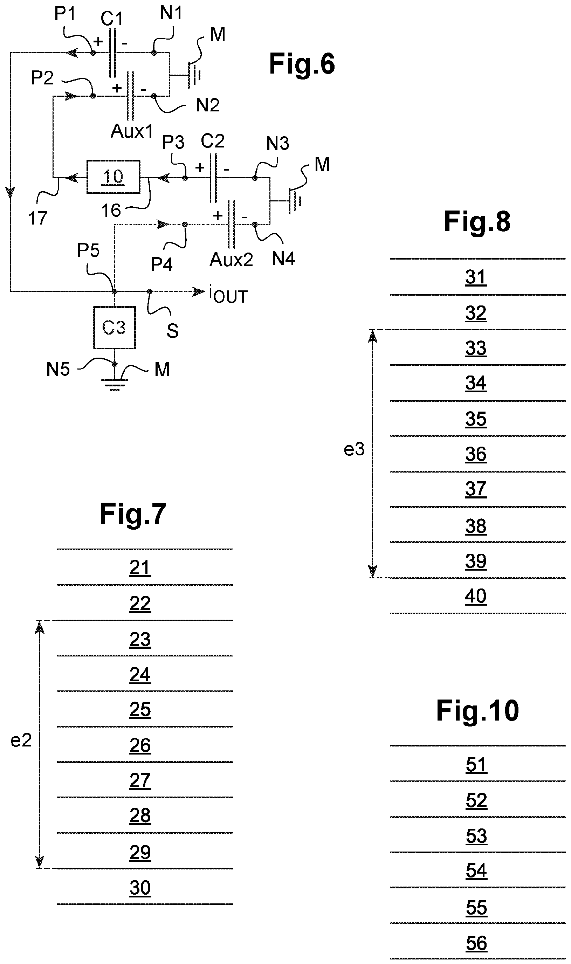

Les premier et deuxième condensateurs principaux C1 et C2 présentent chacun une capacité comprise entre 0,15 et 0,25 kilofarads. Leur structure sera présentée en détail plus bas, en référence aux figures 7 à 9.

Le premier condensateur auxiliaire Aux1 présente une capacité comprise entre un tiers et la moitié de la capacité du premier condensateur principal C1, tandis que le deuxième condensateur auxiliaire Aux2 présente, là encore, une capacité comprise entre un tiers et la moitié de la capacité du deuxième condensateur principal C2.Le condensateur de stockage C3 présente lui aussi une capacité comprise entre 0,3 et 0,35 kilofarads. Sa structure sera présentée plus bas en référence à la figure 10. Il comprend une borne positive P5, et une borne négative N5 qui est connectée à la masse électrique M. La borne de sortie S du système de stockage 1 est connectée directement à la borne positive P5 du condensateur de stockage C3. Ce condensateur agit donc notamment comme un tampon, c'est-à-dire comme un réservoir de charges électriques, entre la borne de sortie S et le reste du système de stockage (si un fort courant électrique est appelé de manière transitoire, au niveau de la borne de sortie S, ce courant électrique sera fourni par le condensateur de stockage C3). Ce condensateur joue aussi un rôle particulier dans le transfert de charges électriques interne au système de stockage 1, comme cela sera expliqué plus bas.

Le système de commutation 4 est configuré notamment pour, au cours d'une première étape, connecter entre eux les condensateurs du système de stockage 1 selon une première configuration représentée schématiquement sur la figure 5.

Le système de commutation 4 est configuré également pour, au cours d'une deuxième étape, connecter les condensateurs du système de stockage selon une deuxième configuration représentée schématiquement sur la figure 6.

Dans la première configuration (figure 5) :
- la borne positive P3 du deuxième condensateur principal C2 est connectée à la borne positive P5 du condensateur de stockage C3,
- la borne positive P1 du premier condensateur principal C1 est connectée en entrée du dispositif 10 multiplicateur d'électrons, c'est-à-dire qu'elle est connectée au conducteur d'entrée 16 de ce dispositif 10,
- la sortie de ce dispositif 10, c'est-à-dire son conducteur électrique de sortie 17, est connectée à la borne positive P4 du deuxième condensateur auxiliaire Aux2, et
- de manière optionnelle, la borne positive P5 du condensateur de stockage C3 est connectée à la borne de positive P2 du premier condensateur auxiliaire Aux1.

Deux bornes sont connectées entre elles lorsqu'elles sont reliées l'une à l'autre par un conducteur électrique (tel qu'un fil électrique), soit directement (c'est-à-dire sans composant intermédiaire), soit indirectement, c'est-à-dire par l'intermédiaire d'un ou plusieurs composants électriques, tels que des interrupteurs commandés par exemple. Lorsque deux bornes sont connectées entre elles, des charges électriques peuvent être échangées entre elles.

La connexion entre la borne positive P5 du condensateur de stockage C3 et à la borne de positive P2 du premier condensateur auxiliaire Aux1 est réalisée de manière à autoriser seulement le passage d'un courant électrique positif, de la borne positive P5, vers la borne positive P2 (par exemple grâce à une diode).

Dans la deuxième configuration (figure 6) :
- la borne positive P1 du premier condensateur principal C1 est connectée à la borne positive P5 du condensateur de stockage C3,
- la borne positive P3 du deuxième condensateur principal C2 est connectée en entrée du dispositif 10 multiplicateur d'électrons,
- la sortie de ce dispositif 10 est connectée à la borne positive P2 du premier condensateur auxiliaire Aux1, et
- de manière optionnelle, la borne positive P5 du condensateur de stockage C3 est connectée à la borne de positive P4 du deuxième condensateur auxiliaire Aux2.

La connexion entre la borne positive P5 du condensateur de stockage C3 et à la borne de positive P4 du deuxième condensateur auxiliaire Aux2 est réalisée de manière à autoriser seulement le passage d'un courant électrique positif, de la borne positive P5, vers la borne positive P4.

Le système de commutation 4 est configuré en outre pour basculer de la première configuration à la deuxième configuration lorsque la tension électrique entre les bornes P3 et N3 du deuxième condensateur principal C2 dévient inférieure à une tension de seuil U_{T} donnée. Cette tension de seuil peut par exemple être comprise entre trois quarts et deux tiers d'une tension nominale U_{N} du deuxième condensateur principal C2. Dans l'exemple décrit ici, cette tension nominale U_{N} est égale à 24 volts environ.

De manière comparable, le système de commutation 4 est configuré pour basculer de la deuxième configuration à la première configuration lorsque la tension électrique entre les bornes P1 et N1 du premier condensateur principal C1 dévient inférieure à la tension de seuil U_{T}.

En variante, le système de commutation 4 pourrait être configuré pour basculer de la première configuration à la deuxième configuration lorsque l'intensité d'un courant électrique débité par la borne positive P3 du deuxième condensateur principal C2 devient inférieure à une intensité seuil i_{T} prédéterminée, égale par exemple à 4 ampères. Dans le cadre de cette variante, le système de commutation 4 est alors configuré pour basculer de la deuxième configuration à la première configuration lorsque l'intensité d'un courant électrique débité par la borne positive P1 du premier condensateur principal C1 devient inférieure à l'intensité seuil i_{T}.

La structure détaillée du système de commutation 4, grâce à laquelle sont réalisés les connexions et basculements décrits ci-dessus, est classique, et ne sera donc pas décrite en détail ici.

Il est noté toutefois que le système de commutation 4 comprend des composants électriques actifs, tels que des amplificateurs opérationnels ou des comparateurs, et des transistors ou des thyristors. Ces composants actifs sont alimentés électriquement par le système de stockage 1 lui-même (par exemple par le condensateur de stockage C3), qui fonctionne donc de manière autonome, c'est-à-dire sans avoir à être alimentée électriquement par une source d'électricité externe au système de stockage.

Le fonctionnement du système de stockage peut maintenant être décrit.

Lors d'une phase initiale de mise en route, une alimentation externe, telle qu'une batterie d'accumulateurs, est connectée par un utilisateur entre la borne d'entrée E du système de stockage 1 et sa masse électrique M. Cette alimentation externe délivre une tension continue. Les différents condensateurs du système de stockage C1, C2, C3, Aux1, Aux2, initialement déchargés, sont alors chargés électriquement grâce au courant électrique reçu de cette alimentation externe.

Cette alimentation externe est ensuite déconnectée du système de stockage 1. A l'issu de cette phase initiale, les condensateurs C1, C2, C3, Aux1, Aux2 sont chargés. Pour chacun de ces condensateurs, la tension électrique entre la borne positive et la borne négative du condensateur est alors égale, ici, à la tension nominale U_{N}.

La phase de service du système de stockage 1 débute alors (cette phase est appelée aussi phase de fonctionnement, ou phase d'utilisation).

En phase de service, la configuration du système bascule régulièrement de la première à la deuxième configuration, puis de la deuxième à la première configuration, et ainsi de suite.

Dans la première configuration (première étape, figure 5), le deuxième condensateur principal C2 charge le condensateur de stockage C3 (autrement formulé, le condensateur C2 se décharge partiellement dans le condensateur C3). Cela qui permet de maintenir la tension électrique aux bornes du condensateur de stockage C3 approximativement constante, bien que ce dernier débite le courant électrique de sortie i_{OUT}.

Dans le même temps, le premier condensateur de stockage C1 charge le deuxième condensateur auxiliaire Aux2 par l'intermédiaire du dispositif 10 multiplicateur d'électrons. La charge électrique stockée dans le deuxième condensateur auxiliaire Aux2 est ainsi maintenue constante, voire même augmente légèrement. Le deuxième condensateur auxiliaire Aux2 charge alors, par influence électrostatique, le deuxième condensateur principal C2. Cela permet de compenser au moins en partie la baisse de tension aux bornes du deuxième condensateur principal C2 due au fait que ce condensateur débite dans le condensateur de stockage C3.

Par ailleurs, toujours au cours de cette étape, le condensateur de stockage C3 charge le premier condensateur auxiliaire Aux1, si bien que la charge électrique stockée dans le premier condensateur auxiliaire Aux1 est maintenue constante, voire même augmente légèrement. Le premier condensateur auxiliaire Aux1 charge alors, par influence électrostatique, le premier condensateur principal C1, ce qui permet de maintenir constante, voire même d'augmenter légèrement la tension électrique aux bornes de ce dernier.

Au cours de cette première étape, malgré le mécanisme de régénération de charges électriques mis en oeuvre grâce au dispositif multiplicateur d'électrons, la tension électrique entre les bornes P3, N3 du deuxième condensateur principal C2 décroit progressivement. Lorsque cette tension devient inférieure à la tension de seuil U_{T}, le système de commutation 4 fait basculer le système de stockage 1 de la première à la deuxième configuration.

Dans cette deuxième configuration (deuxième étape, figure 6), le premier condensateur principal C1 charge le condensateur de stockage C3 (autrement formulé, le condensateur C1 se décharge partiellement dans le condensateur C3). Cela qui permet là encore de maintenir la tension électrique aux bornes du condensateur de stockage C3 approximativement constante, bien que ce dernier débite, là encore, le courant électrique de sortie i_{OUT}.

Dans le même temps, le deuxième condensateur de stockage C2 charge le premier condensateur auxiliaire Aux1 par l'intermédiaire du dispositif 10 multiplicateur d'électrons. Cela permet, comme expliqué ci-dessus, de compenser au moins en partie la baisse de tension aux bornes du premier condensateur principal C1, due au fait que ce condensateur débite dans le condensateur de stockage C3.

Par ailleurs, toujours au cours de cette étape, le condensateur de stockage C3 charge le deuxième condensateur auxiliaire Aux2, ce qui permet de maintenir constante, voire même d'augmenter légèrement la tension électrique aux bornes du deuxième condensateur principal C2 (comme déjà expliqué ci-dessus).

Au cours de cette deuxième étape, la tension électrique entre les bornes P1, N1 du premier condensateur principal C1 décroit progressivement. Lorsque cette tension devient inférieure à la tension de seuil U_{T}, le système de commutation 4 fait basculer le système de stockage 1 de la deuxième configuration à la première configuration décrite plus haut.

La durée de la première étape est approximativement égale à celle de la deuxième étape. Cette durée est comprise en pratique entre quelques centièmes de secondes et une seconde.

Un exemple numérique est donné ci-dessous à titre d'illustration. Cet exemple correspond à une tension de charge nominale U_{N} de 12 volts, à une tension de service de 24 volts, et à un courant électrique de sortie i_{OUT} de 5 ampères environ. Par ailleurs, dans cet exemple, les valeurs de capacités des condensateurs sont les suivantes :
- condensateurs principaux C1, C2 : capacité de 0,2 kilofarad chacun,
- condensateurs auxiliaires Aux1, Aux2: capacité de 0,07 kilofarad chacun,
- condensateur de stockage C3 : capacité de 0,3 kilofarads.

Dans ces conditions, la première étape, de même que la deuxième étape, dure environ 0,8 seconde.

Dans le système de stockage 1 qui vient d'être décrit, le fait de multiplier des charges électriques lors de leur transfert d'un condensateur à l'autre, à l'aide du dispositif multiplicateur d'électrons, permet de maintenir le niveau de charge de ces condensateurs pendant des durées importantes, de l'ordre du jour ou plus.

Le déposant a constaté notamment, pour les valeurs de capacités qui viennent d'être indiquées, que le système de stockage 1 est capable de délivrer, sous une tension électrique de 24 volts (tension aux bornes du condensateur de stockage C3), un courant électrique de sortie i_{OUT} constant dont l'intensité est de 5 ampères environ, et cela pendant plusieurs jours d'affilé. Comme déjà indiqué, pendant cette phase de service, le système de stockage est déconnecté de l'alimentation externe ayant servi initialement à charger ses condensateurs.

La structure des condensateurs du système de stockage 1 est maintenant décrite plus en détail.

Le premier condensateur principal C1 est réalisé en empilant un certain nombre de couches isolantes électriquement entre deux feuilles métalliques, appelées armatures. Cet empilement est ensuite enroulé sur lui-même un grand nombre de fois pour former un volume en forme de cylindrique aplati (aplati latéralement, avec une section droite transverse approximativement en forme de haricot, au lieu d'être circulaire).

L'empilement en question est représenté schématiquement sur la figure 7. Il comprend ici 10 couches portant respectivement les références 21 à 30, empilés les unes sur les autres dans l'ordre de leurs numéros de référence (21 à 30).

La couche externe 21, isolante, est une feuille en papier (sec). La couche suivante 22 est une feuille d'aluminium. Il s'agit de l'armature négative du premier condensateur principal C1. Les sept couches suivantes sont des couches isolantes séparant l'armature négative de l'armature positive du condensateur. L'armature positive correspond à la couche 30. Il s'agit là encore d'une feuille d'aluminium.

La composition des différentes couches est indiquée dans le tableau 1 ci-dessous. Leurs épaisseurs relatives sont également indiquées dans ce tableau, à titre d'illustration, pour un exemple particulier de réalisation.

| Tableau 1 | | |
|---|---|---|
| numéro de référence de la couche | matériau de la couche | épaisseur de la couche |
| 21 | papier (sec) | de 0,2 à 0,4 fois e |
| 22 | aluminium | 0,8 × e |
| 23 | polytéréphtalate d'éthylène (PET) | de 0,04 à 0,08 fois e |
| 24 | papier (sec) | de 0,2 à 0,4 fois e |
| 25 | mica | de 0,026 à 0,052 fois e |
| 26 | papier (sec) | de 0,2 à 0,4 fois e |
| 27 | PET | de 0,04 à 0,08 fois e |
| 28 | papier (sec) | de 0,2 à 0,4 fois e |
| 29 | mica | de 0,026 à 0,052 fois e |
| 30 | aluminium | e |

L'épaisseur totale des couches isolantes 23 à 29, c'est-à-dire la distance e2 entre l'armature positive et l'armature négative (avant enroulement) est comprise entre 20 et 50 microns.

Avant enroulement, chaque armature forme ici un rectangle, dont la longueur est de 6 mètres de long et dont la hauteur h vaut 20 centimètres environ.

Une fois que l'empilement est enroulé sur lui-même, la couche qu'il présente extérieurement est la couche 21. Autrement formulé, une fois enroulé, sa surface externe (cylindrique) est constituée par une partie de la face externe de la feuille de papier 21.

Pour l'exemple particulier de réalisation décrit ci-dessus, la capacité du premier condensateur principal C1 est d'environ 0,2 kilofarad.

Le premier condensateur auxiliaire Aux1 présente une structure similaire à celle du premier condensateur principal C1.

Il est réalisé lui aussi en empilant plusieurs couches isolantes électriquement entre deux feuilles métalliques, puis en enroulant cet empilement sur lui-même un grand nombre de fois pour former un volume approximativement cylindrique. Cet empilement est représenté schématiquement sur la figure 8. Il comprend ici 10 couches portant respectivement les références 31 à 40, empilés les unes sur les autres dans l'ordre de leurs numéros de référence.

La couche externe 31, isolante, est une feuille en papier (sec). La couche suivante 32, est une feuille d'aluminium. Il s'agit de l'armature positive du premier condensateur auxiliaire Aux1. Les sept couches suivantes sont des couches isolantes séparant l'armature positive de l'armature négative du condensateur. L'armature négative correspond à la couche 40. Il s'agit là encore d'une feuille d'aluminium.

La composition des différentes couches de cet empilement est indiquée dans le tableau 2 ci-dessous. Leurs épaisseurs relatives sont également indiquées dans ce tableau, à titre d'illustration, pour un exemple particulier de réalisation.

| Tableau 2 | | |
|---|---|---|
| numéro de référence de la couche | matériau de la couche | épaisseur de la couche |
| 31 | papier (sec) | de 0,2 à 0,4 fois e' |
| 32 | aluminium | e' |
| 33 | mica | de 0,026 à 0,052 fois e' |
| 34 | papier (sec) | de 0,2 à 0,4 fois e' |
| 35 | PET | de 0,04 à 0,08 fois e' |
| 36 | papier (sec) | de 0,2 à 0,4 fois e' |
| 37 | mica | de 0,026 à 0,052 fois e' |
| 38 | papier (sec) | de 0,2 à 0,4 fois e' |
| 39 | PET | de 0,04 à 0,08 fois e' |
| 40 | aluminium | 0,8 × e' |

L'épaisseur totale des couches isolantes 33 à 39, c'est-à-dire la distance e3 entre l'armature positive et l'armature négative (avant enroulement) est comprise, là encore, entre 20 et 50 microns.

Avant enroulement, chaque armature forme ici un rectangle, dont la longueur est égale à 2,3 mètres environ, ou moins, et dont la hauteur h vaut environ 20 centimètres.

Une fois que l'empilement est enroulé sur lui-même, la couche qu'il présente extérieurement est la couche 31.

La capacité du premier condensateur auxiliaire Aux1 est comprise entre un tiers et la moitié de la capacité du premier condensateur principal C1.

Pour l'exemple particulier de réalisation décrit ci-dessus, la capacité du premier condensateur auxiliaire Aux1 est d'environ 0,07 kilofarad.

Le premier condensateur principal C1 et le premier condensateur auxiliaire Aux1 peuvent présenter des capacités plus grandes que celles de l'exemple décrit ci-dessus (pour augmenter les capacités de ces condensateurs, on augmente par exemple la longueur et/ou la hauteur h de leurs armatures). Il peut être souhaitable d'augmenter les capacités des condensateurs lorsque le système de stockage est destiné à délivrer une puissance électrique plus grande que celle correspondant aux conditions de fonctionnement indiquées plus haut (puissance qui était égale à 120 Watts environ).

Le premier condensateur principal C1, et le premier condensateur auxiliaire Aux1, présentent chacun, initialement, une forme de cylindre (obtenu par enroulement des empilements décrits ci-dessus).

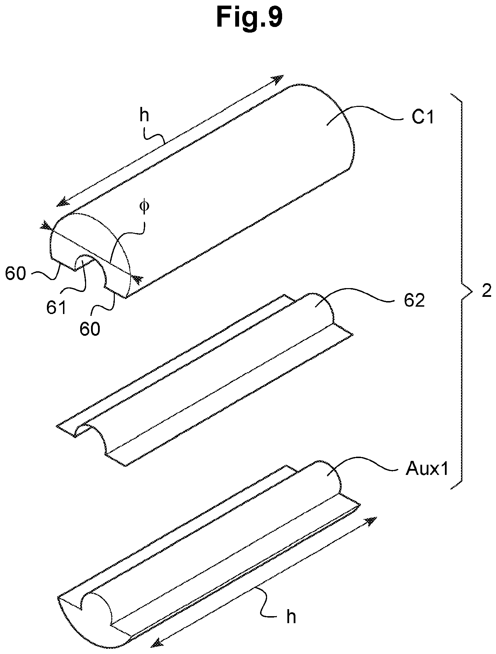

Ils sont ensuite mis en forme, par exemple au moyen de moules, pour leur donner les formes illustrées sur la figure 9, puis sont assemblés l'un avec l'autre.

Le premier condensateur principal C1 a alors la forme d'une portion de cylindre, plus précisément d'un cylindre qui présente un méplat 60 sur toute sa hauteur h. En outre, une gorge 61 de section hémicirculaire est formée sur ce méplat 60. Cette gorge 61 s'étend sur toute la hauteur h du condensateur. Le diamètre de la gorge est égal à environ un tiers du diamètre externe Ø du cylindre dont le condensateur C1 forme une partie.

Le premier condensateur auxiliaire Aux1, une fois mis en forme, a la forme d'une portion de cylindre complémentaire de celle du premier condensateur principal C1, en ce sens que ces deux condensateurs sont conformés pour s'encastrer l'un contre l'autre en formant alors, ensemble, un cylindre de diamètre externe Ø, et de hauteur h. Le diamètre externe Ø de ce cylindre est supérieur à 7 centimètres, préférentiellement supérieur à 15 centimètres. Le premier condensateur principal C1 occupe environ les deux tiers du volume de cylindre, tandis que le premier condensateur auxiliaire Aux1 occupe environ un tiers de ce volume.

En variante, le premier condensateur principal pourrait présenter extérieurement la forme d'un cylindre aplati latéralement et qui aurait été déformé pour lui donner une forme d'ensemble incurvée par rapport à son axe d'enroulement. La section droite du premier condensateur principal, perpendiculairement par rapport à son axe d'enroulement présente alors, globalement, une forme de haricot (haricot blanc ou rouge), avec une partie concave et une partie convexe reliées l'une à l'autre, à deux extrémités opposées, par deux lobes arrondis respectifs. La forme d'ensemble de cette variante de réalisation du premier condensateur principal est donc proche de celle représentée sur les figures, mais moins anguleuse, et donc plus facile à fabriquer. Là encore, la surface externe du condensateur présente une portion concave définissant un gorge longitudinale destinée à recevoir une partie au moins du premier condensateur auxiliaire. Dans le cadre de cette variante, le premier condensateur auxiliaire est par exemple cylindrique, logé en partie dans cette gorge (le premier condensateur auxiliaire est alors avantageusement facile à réaliser).

Une fois que les condensateurs C1 et Aux1 sont encastrés l'un contre l'autre, une partie de l'armature négative du premier condensateur principal C1 (partie située au niveau du méplat et de la gorge) fait face à une partie de l'armature positive du premier condensateur auxiliaire, si bien que ces deux armatures sont en influence électrostatique l'une avec l'autre.

De manière remarquable, un électrolyte est disposé entre le premier condensateur principal C1 et le premier condensateur auxiliaire Aux1 avant qu'ils ne soient appliqués l'un contre l'autre pour former le premier ensemble de stockage 2 capacitif. Pour cela, une feuille en papier 62, imbibée d'électrolyte, est insérée entre ces deux condensateurs dans la zone où ils viennent en contact l'un avec l'autre. Cette feuille a une épaisseur comprise entre 0,2 et 0,4 fois l'épaisseur de l'armature positive du premier condensateur principal C1. L'électrolyte est par exemple de l'acide sulfurique concentré (à 20 moles par litre ou plus).

Le déposant a constaté que cette structure du premier ensemble de stockage 2, et en particulier la couche d'électrolyte appliquée entre le premier condensateur principal C1 et le premier condensateur auxiliaire Aux1, améliore l'énergie électrique totale que peut délivrer le système de stockage, par rapport à une solution basée sur des condensateurs standards disponibles commercialement.

Les valeurs de capacités indiquées plus haut pour le premier condensateur principal C1 et le premier condensateur auxiliaire Aux1 correspondent aux capacités respectives de ces condensateurs, mis en forme, mais avant assemblage.

Le deuxième ensemble de stockage 3 capacitif est ici identique au premier ensemble de stockage 2 qui vient d'être décrit.

Le condensateur de stockage C3 présente une structure différente de celle des condensateurs principaux et auxiliaires. Il intègre en effet deux couches de poudre de carbone mises en contact l'une avec l'autre, d'un point de vue électrochimique, par une couche d'électrolyte.

Le condensateur de stockage C3 est toutefois réalisé lui aussi en empilant des couches, puis en enroulant cet empilement sur lui-même. L'empilement en question est représenté schématiquement sur la figure 10. Il comprend ici 6 couches portant respectivement les références 51 à 56, empilés les unes sur les autres dans l'ordre de leurs numéros de référence.

La couche externe 51, isolante, est une feuille en papier sec.

La couche suivante, 52, est une feuille d'aluminium. Il s'agit de l'une des armatures du condensateur de stockage C3.

La couche suivante, 53, est formée de poudre de carbone. Elle est séparée de la couche 55, qui est également formée de poudre de carbone, par une feuille de papier 54 imbibée d'électrolyte. Cet électrolyte est par exemple de l'acide sulfurique concentré (à 20 moles par litres ou plus).

La couche 56 est une feuille d'aluminium qui constitue l'autre armature du condensateur de stockage C3.

Les deux armatures du condensateur sont chacune en contact électrique avec l'une des couches de poudre de carbone.

## Revendications

1. Dispositif (10) multiplicateur d'électrons **caractérisé en ce qu'**il comprend:
- un bloc de rhodium (11), traversé par un canal (12) qui s'étend, le long d'une ligne moyenne, depuis une ouverture d'entrée (14) dans le canal jusqu'à une ouverture de sortie (15) du canal,
- un conducteur électrique d'entrée (16), en contact avec le bloc de rhodium (11) sur une partie au moins du périmètre de l'ouverture d'entrée (14),
- un conducteur électrique de sortie (17), en contact avec le bloc de rhodium (11) sur une partie au moins du périmètre de l'ouverture de sortie (15), et
- une source de champ magnétique (18) configurée pour générer, dans le canal (12), un champ magnétique, variable au cours du temps, dirigé parallèlement à la ligne moyenne du canal, orienté de l'ouverture d'entrée (14) vers l'ouverture de sortie (15) du canal.

2. Dispositif (10) selon la revendication 1, dans lequel la source de champ magnétique est configurée de manière à ce que le champ magnétique généré dans le canal varie au cours du temps en présentant une succession d'impulsions, séparées deux à deux par une période temporelle comprise entre 5 et 10 millisecondes, la durée de chaque impulsion étant inférieure à un dixième de ladite période, la valeur moyenne au cours du temps dudit champ magnétique étant comprise entre 17 microteslas et 18 microteslas.

3. Dispositif (10) selon la revendication 2, dans lequel le canal (12) est cylindrique, de diamètre (d) inférieur à 1 millimètre.

4. Dispositif (10) selon l'une des revendications 1 à 3, dans lequel la longueur (L) du canal (12), entre son ouverture d'entrée (14) et son ouverture de sortie (15), est comprise entre 10 et 15 millimètres.

5. Dispositif (10) selon l'une des revendications 1 à 4, dans lequel le bloc de rhodium (11) est en forme de cube, et dans lequel la ligne moyenne du canal (11) s'étend perpendiculairement à une face (110, 111) du cube.

6. Dispositif (10) selon l'une des revendications 1 à 5, dans lequel la source de champ magnétique (18) comprend au moins une bobine (18A, 18B), connectée électriquement :
- en entrée (E18A, E18B), au conducteur électrique d'entrée (16), et
- en sortie (S18A, S18B), à une masse électrique (M) du dispositif (10) multiplicateur d'électrons.

7. Système de stockage (1) capacitif d'énergie électrique comprenant :
- un premier ensemble de stockage (2) capacitif comprenant au moins un condensateur (C1, Aux1),
- un deuxième ensemble de stockage (3) capacitif comprenant au moins un autre condensateur (C2, Aux2), et
- une borne de sortie (S) pour délivrer un courant électrique de sortie (i_{OUT}),
**caractérisé en ce qu'**il comprend en outre un dispositif (10) multiplicateur d'électrons selon l'une des revendications 1 à 6, et **en ce que**, dans une première configuration du système de stockage (1) :
- le deuxième ensemble de stockage (3) est connecté à la borne de sortie (S) du système de stockage (1),
- le premier ensemble de stockage (2) est connecté au conducteur électrique d'entrée (16) du dispositif (10) multiplicateur d'électrons, et
- le conducteur électrique de sortie (17) est connecté au dispositif (10) multiplicateur d'électrons au deuxième ensemble de stockage (3).

8. Système de stockage (1) selon la revendication 7, comprenant en outre un système de commutation (4) configuré pour connecter les premier et deuxième ensembles de stockage (2, 3) alternativement dans la première configuration et dans une deuxième configuration dans laquelle :
- le premier ensemble de stockage (2) est connecté à la borne de sortie (S) du système de stockage (1),
- le deuxième ensemble de stockage (3) est connecté au conducteur électrique d'entrée (16) du dispositif (10) multiplicateur d'électrons, et
- le conducteur électrique de sortie (17) du dispositif (10) multiplicateur d'électrons est connecté au premier ensemble de stockage (2).

9. Système (1) selon la revendication 8, dans lequel
- le premier ensemble de stockage (2) comprend :
- un premier condensateur principal (C1) comportant une borne positive (P1) et une borne négative (N1) qui est reliée à une masse électrique (M) du système de stockage (1), et
- un premier condensateur auxiliaire (Aux1), comportant une borne positive (P2) et une borne négative (N2) qui est reliée à la masse électrique (M), une armature (32) du premier condensateur auxiliaire (Aux1) étant en influence électrostatique avec une armature (22) du premier condensateur principal (C1),
- le deuxième ensemble de stockage (3) comprend :
- un deuxième condensateur principal (C2) comportant une borne positive (P3) et une borne négative (N3) qui est reliée à la masse électrique (M), et
- un deuxième condensateur auxiliaire (Aux2), comportant une borne positive (P4) et une borne négative (N4) qui est reliée à la masse électrique (M), une armature du deuxième condensateur auxiliaire (Aux2) étant en influence électrostatique avec une armature du deuxième condensateur principal (C2), et dans lequel
- dans la première configuration du système de stockage (1) :
- la borne positive (P3) du deuxième condensateur principal (C2) est connectée à la borne de sortie (S) du système de stockage (1),
- la borne positive (P1) du premier condensateur principal (C1) est connectée au conducteur électrique d'entrée (16) du dispositif (10) multiplicateur d'électrons, et
- le conducteur électrique de sortie (17) du dispositif (10) multiplicateur d'électrons est connecté à la borne positive (P3) du deuxième condensateur auxiliaire (Aux2), et
- dans la deuxième configuration du système de stockage (1) :
- la borne positive (P1) du premier condensateur principal (C1) est connectée à la borne de sortie (S) du système de stockage (1),
- la borne positive (P3) du deuxième condensateur principal (C2) est connectée au conducteur électrique d'entrée (16) du dispositif (10) multiplicateur d'électrons, et
- le conducteur électrique de sortie (17) du dispositif (10) multiplicateur d'électrons est connecté à la borne positive (P2) du premier condensateur auxiliaire (Aux1).

10. Système (1) selon la revendication 9, dans lequel le système de commutation (4) est configuré pour :
- basculer de la première configuration à la deuxième configuration lorsqu'une tension électrique entre la borne positive (P3) et la borne négative (N3) du deuxième condensateur principal (C2) devient inférieure à une tension de seuil prédéterminée, ou lorsque l'intensité d'un courant électrique débité par la borne positive (P3) du deuxième condensateur principal (C2) devient inférieure à une intensité seuil prédéterminée, et pour
- basculer de la deuxième configuration à la première configuration lorsqu'une tension électrique entre la borne positive (P1) et la borne négative (N1) du premier condensateur principal (C1) devient inférieure à une tension de seuil prédéterminée, ou lorsque l'intensité d'un courant électrique débité par la borne positive (P1) du premier condensateur principal (C1) devient inférieure à une intensité seuil prédéterminée.

11. Système (1) selon l'une des revendications 9 ou 10, dans lequel le premier condensateur principal (C1), et le deuxième condensateur principal (C2) présentent chacun une capacité comprise entre 0,15 et 0,25 kilofarad.

12. Système (1) selon l'une des revendications 9 à 11, comprenant en outre un condensateur de stockage (C3) qui comporte une borne positive (P5) et une borne négative (N5) reliées respectivement à la borne de sortie (S) et à la masse électrique (M) du système de stockage (1), le condensateur de stockage (C3) présentant une capacité qui est :
- supérieure ou égale à la somme de la capacité du premier condensateur principal (C1) et de la capacité du premier condensateur auxiliaire (Aux1), et
- supérieure ou égale à la somme de la capacité du deuxième condensateur principal (C2) et de la capacité du deuxième condensateur auxiliaire (Aux2).

13. Système (1) selon la revendication 12, dans lequel :
- dans la première configuration du système de stockage (1), la borne positive (P5) du condensateur de stockage (C3) est connectée à la borne positive (P2) du premier condensateur auxiliaire (Aux1) de manière à autoriser un transfert de charges électriques du condensateur de stockage (C3) vers le premier condensateur auxiliaire (Aux1), et dans lequel
- dans la deuxième configuration du système de stockage (1), la borne positive (P5) du condensateur de stockage (C3) est connectée à la borne positive (P4) du deuxième condensateur auxiliaire (Aux2) pour autoriser un transfert de charges électriques du condensateur de stockage (C3) vers le deuxième condensateur auxiliaire (Aux2).

14. Système (1) selon l'une des revendications 9 à 13, dans lequel l'armature (32) du premier condensateur auxiliaire (Aux1) qui est en influence électrostatique avec l'une des armatures du premier condensateur principal (C1) est au contact de cette armature (22) du premier condensateur principal (C1) par l'intermédiaire d'une couche d'électrolyte (62).

15. Système (1) selon l'une des revendications 9 à 14, dans lequel le premier condensateur auxiliaire (Aux1) et le premier condensateur principal (C1) forment respectivement deux éléments distincts, appliqués l'un contre l'autre le long d'une surface de contact.

## Patentansprüche

1. Elektronenvervielfachervorrichtung (10), **dadurch gekennzeichnet, daß** sie
- einen Rhodiumblock (11), der von einem Kanal (12) durchzogen ist, der sich entlang einer Mittellinie von einer Eingangsöffnung (14) in den Kanal bis zu einer Ausgangsöffnung (15) aus dem Kanal erstreckt,
- einen elektrischen Eingangsleiter (16), der mit dem Rhodiumblock (11) wenigstens über einen Teil des Umfangs der Eingangsöffnung (14) in Kontakt ist,
- einen elektrischen Ausgangsleiter (17), der mit dem Rhodiumblock (11) wenigstens über einen Teil des Umfangs der Ausgangsöffnung (15) in Kontakt ist.
- eine Magnetfeldquelle (18), die dazu ausgelegt ist, im Kanal (12) ein zeitlich variables Magnetfeld zu erzeugen, das von der Eingangsöffnung (14) zur Ausgangsöffnung (15) des Kanals gerichtet ist,
aufweist.

2. Vorrichtung (10) gemäß Anspruch 1, bei der die Magnetfeldquelle so ausgelegt ist. daß sich das im Kanal erzeugte Magnetfeld im Verlauf der Zeit ändert, indem es eine Folge von Impulsen aufweist, die jeweils durch einen Zeitraum von 5 bis 10 Millisekunden voneinander getrennt sind, wobei die Dauer jedes Impulses kleiner als ein Zehntel des jeweiligen Zeitraums ist, wobei der zeitliche Mittelwert des Magnetfelds zwischen 17 Mikrotesla und 18 Mikrotesla beträgt.

3. Vorrichtung (10) gemäß Anspruch 2, bei der der Kanal (12) zylindrisch mit einem Durchmesser (d) von weniger als 1 Millimeter ist.

4. Vorrichtung (10) gemäß einem der Ansprüche 1 bis 3, bei der die Länge (L) des Kanals (12) zwischen seiner Eingangsöffnung (14) und seiner Ausgangsöffnung (15) zwischen 10 und 15 Millimeter beträgt.

5. Vorrichtung (10) gemäß einem der Ansprüche 1 bis 4, bei der der Rhodiumblock die Form eines Würfels hat und bei der sich die Mittellinie des Kanals (12) senkrecht zu einer Seite (110, 111) des Würfels erstreckt.

6. Vorrichtung (10) gemäß einem der Ansprüche 1 bis 5, bei der die Magnetfeldquelle (18) wenigstens eine Spule (18A, 18B) aufweist, die
- am Eingang (E18A, E18B) mit dem elektrischen Eingangsleiter (16) und
- am Ausgang (S18A, S18B) mit einer elektrischen Masse (M) der Elektronenvervielfachervorrichtung (10)
elektrisch verbunden ist.

7. System (1) zum kapazitiven Speichern elektrischer Energie mit
- einer wenigstens einen Kondensator (C1, Aux1) aufweisenden ersten kapazitiven Speichereinheit (2),
- einer wenigstens einen weiteren Kondensator C2, Aux2) aufweisenden zweiten kapazitiven Speichereinheit (3) und
- einem Ausgangsanschluß (S) zum Liefern eines Ausgangsstroms (i_{OUT}) **dadurch gekennzeichnet, daß** es außerdem eine Elektronenvervielfachervorrichtung (10) gemäß einem der Ansprüche 1 bis 6 aufweist und daß in einer ersten Konfiguration des Speichersystems (1)
- die zweite Speichereinheit (3) mit dem Ausgangsanschluß (S) des Speichersystems (1) verbunden ist,
- die erste Speichereinheit (2) mit dem elektrischen Eingangsleiter (16) der Elektronenvervielfachervorrichtung (10) verbunden ist und
- der elektrische Ausgangsleiter (17) an der zweiten Speichereinheit (3) mit der Elektfonenvervielfachervorrichtung (10) verbunden ist.

8. Speichersystem (1) gemäß Anspruch 7, das außerdem ein Umschaltsystem (4) aufweist, das dazu ausgelegt ist. die erste und die zweite Speichereinheit (2, 3) abwechselnd in der ersten und in einer zweiten Konfiguration, in der
- die erste Speichereinheit (2) mit dem Ausgangsanschluß (S) des Speichersystems (1) verbunden ist.
- die zweite Speichereinheit (3) mit dem elektrischen Eingangsleiter (16) der Elektronenvervielfachervorrichtung (10) verbunden ist und
- der elektrische Ausgangsleiter (17) der Elektronenvervielfachervorrichtung (10) mit der ersten Speichereinheit (2) verbunden ist.
anzusch ließen.

9. Speichersystem (1) gemäß Anspruch 8, bei dem
- die erste Speichereinheit (2)
- einen ersten Hauptkondensator (C1) mit einem positiven Anschluß (P1) und einem negativen Anschluß (N1), der mit einer elektrischen Masse (M) des Speichersystems (1) verbunden ist, und
- einen ersten Hilfskondensator (Aux1) mit einem positiven Anschluß (P2) und einem negativen Anschluß (N2), der mit der elektrischen Masse (M) verbunden ist, wobei eine Armierung (32) des ersten Hilfskondensators (Aux1) mit einer Armierung (22) des ersten Hauptkondensators (C1) in elektrostatischem Einfluß ist,
aufweist,
- die zweite Speichereinheit (3)
- einen zweiten Hauptkondensator (C2) mit einem positiven Anschluß (P3) und einem negativen Anschluß (N3), der mit der elektrischen Masse (M) verbunden ist, und
- einen zweiten Hilfskondensator (Aux2) mit einem positiven Anschluß (P4) und einem negativen Anschluß (N4), der mit der elektrischen Masse (M) verbunden ist, wobei eine Armierung des zweiten Hilfskondensators (Aux2) mit einer Armierung des zweiten Hauptkondensators (C2) in elektrostatischem Einfluß ist,
aufweist
und bei dem
in der ersten Konfiguration des Speichersystems (1)
- der positive Anschluß (P3) des zweiten Hauptkondensators (C2) mit dem Ausgangsanschluß (S) des Speichersystems (1) verbunden ist,
- der positive Anschluß (P1) des ersten Hauptkondensators (C1) mit dem elektrischen Eingangsleiter (16) der Elektronenvervielfachervorrichtung (10) verbunden ist und
- der elektrische Ausgangsleiter (17) der Elektronenvervielfachervorrichtung (10) mit dem positiven Anschluß (P3) des zweiten Hilfskondensators (Aux2) verbunden ist. und
in der zweiten Konfiguration des Speichersystems (1)
- der positive Anschluß (P1) des ersten Hauptkondensators (C1) mit dem Ausgangsanschluß (S) des Speichersystems (1) verbunden ist,
- der positive Anschluß (P3) des zweiten Hauptkondensators (C2) mit dem elektrischen Eingangsleiter (16) der Elektronenvervielfachervorrichtung (10) verbunden ist und
- der elektrische Ausgangsleiter (17) der Elektronenvervielfachervorrichtung (10) mit dem positiven Anschluß (P2) des ersten Hilfskondensators (Aux1) verbunden ist.

10. System (1) gemäß Anspruch 9, bei dem das Umschaltsystem (4) dazu ausgelegt ist.
- von der ersten Konfiguration in die zweite Konfiguration zu kippen, wenn eine elektrische Spannung zwischen dem positiven Anschluß (P3) und dem negativen Anschluß (N3) des zweiten Hauptkondensators (C2) kleiner als eine vorbestimmte Schwellenspannung wird oder wenn die Stärke eines von dem positiven Anschluß (P3) des zweiten Hauptkondensators (C2) abgegebenen elektrischen Stroms kleiner als ein vorbestimmter Schwellenstrom wird, und
- von der zweiten Konfiguration in die erste Konfiguration zu kippen, wenn eine elektrische Spannung zwischen dem positiven Anschluß (P1) und dem negativen Anschluß (N1) des ersten Hauptkondensators (C1) kleiner als eine vorbestimmte Schwellenspannung wird oder wenn die Stärke eines von dem positiven Anschluß (P1) des ersten Hauptkondensators (C1) abgegebenen elektrischen Stroms kleiner als ein vorbestimmter Schwellenstrom wird.

11. System (1) gemäß einem der Ansprüche 9 oder 10. bei dem der erste Hauptkondensator (C1) und der zweite Hauptkondensator (C2) jeweils eine Kapazität zwischen 0,15 und 0,25 Kilofarad aufweisen.

12. System (1) gemäß einem der Ansprüche 9 bis 11. das außerdem einen Speicherkondensator (C3) aufweist, der einen positiven Anschluß (P5) und einen negativen Anschluß (N5) aufweist, die jeweils mit dem Ausgangsanschluß (S) und der elektrischen Masse (M) des Speichersystems (1) verbunden sind, wobei der Speicherkondensator (C3) eine Kapazität aufweist, die
- größer als oder gleich der Summe der Kapazität des ersten Hauptkondensators (C1) und des ersten Hilfskondensators (Aux1) und
- größer als oder gleich der Summe der Kapazität des zweiten Hauptkondensators (C2) und des zweiten Hilfskondensators (Aux2)
ist.

13. System (1) gemäß Anspruch 12, bei dem
- in der ersten Konfiguration des Speichersystems (1) der positive Anschluß (P5) des Speicherkondensators (C3) mit dem positiven Anschluß (P2) des ersten Hilfskondensators (Aux1) so verbunden ist, daß eine Übertragung elektrischer Ladung vom Speicherkondensator (C3) zum ersten Hilfskondensator (Aux1) erlaubt wird, und bei dem
- in der zweiten Konfiguration des Speichersystems (1) der positive Anschluß (P5) des Speicherkondensators (C3) mit dem positiven Anschluß (P4) des zweiten Hilfskondensators (Aux2) verbunden ist, um eine Übertragung elektrischer Ladung vom Speicherkondensator (C3) zum zweiten Hilfskondensator (Aux2) zu erlauben.

14. System (1) gemäß einem der Ansprüche 9 bis 13. bei dem die Armierung (32) des ersten Hilfskondensators (Aux1). die in elektrostatischem Einfluß mit einer der Armierungen des ersten Hauptkondensators (C1) ist, mittels einer Elektrolytschicht (62) in Kontakt mit der Armierung (22) des ersten Hauptkondensators (C1) steht.

15. System (1) gemäß einem der Ansprüche 9 bis 14, bei dem der erste Hilfskondensator (Aux1) und der erste Hauptkondensator (C1) jeweils zwei getrennte Elemente bilden, die entlang einer Kontaktfläche aneinandergedrückt sind.

## Claims

1. An electron-multiplier device (10) **characterized in that** it comprises:
- a rhodium block (11), passed through by a channel (12) that extends, along a mean line, from an inlet (14) of the channel to an outlet (15) of the channel,
- an input electrical conductor (16), in contact with the rhodium block (11) on at least part of the perimeter of the inlet (14),
- an output electrical conductor (17), in contact with the rhodium block (11) on at least part of the perimeter of the outlet (15), and
- a source of magnetic field (18) configured to generate, in the channel (12), a magnetic field, variable over time, directed parallel to the mean line of the channel, oriented from the inlet (14) to the outlet (15) of the channel.

2. The device (10) according to claim 1, wherein the source of magnetic field is configured in such a way that the magnetic field generated in the channel varies over time in a succession of pulses, separated two-by-two by a time period between 5 and 10 milliseconds, the duration of each pulse being lower than one tenth of said period, the mean value over time of said magnetic field being between 17 microteslas and 18 microteslas.

3. The device (10) according to claim 2, wherein the channel (12) is cylindrical, of diameter (d) lower than 1 millimetre.

4. The device (10) according to one of claims 1 to 3, wherein the length (L) of the channel (12), between its inlet (14) and its outlet (15), is between 10 and 15 millimetres.

5. The device (10) according to one of claims 1 to 4, wherein the rhodium block (11) has a cube shape, and wherein the mean line of the channel (11) extends perpendicular to one face (110, 111) of the cube.

6. The device (10) according to one of claims 1 to 5, wherein the source of magnetic field (18) comprises at least one coil (18A, 18B) electrically connected:
- at the input (E18A, E18B), to the input electrical conductor (16), and
- at the output (S18A, S18B), to an electrical ground (M) of the electron-multiplier device (10).

7. An electrical energy capacitive storage system (1) comprising:
- a first capacitive storage unit (2) comprising at least one capacitor (C1 Aux 1),
- a second capacitive storage unit (3) comprising at least one other capacitor (C2, Aux 2), and
- an output terminal (S) for providing an output electrical current (i_{OUT}),
**characterized in that** it further comprises an electron-multiplier device (10) according to one of claims 1 to 6, and **in that**, in a first configuration of the storage system (1):
- the second storage unit (3) is connected to the output terminal (S) of the storage system (1),
- the first storage unit (2) is connected to the input electrical conductor (16) of the electron-multiplier device (10), and
- the output electrical conductor (17) is connected to the electron-multiplier device (10) to the second storage unit (3).

8. The storage system (1) according to claim 7, further comprising a switching system (4) configured to connect the first and second storage units (2, 3) alternatively in the first configuration and in a second configuration, in which:
- the first storage unit (2) is connected to the output terminal (S) of the storage system (1),
- the second storage unit (3) is connected to the input electrical conductor (16) of the electron-multiplier device (10), and
- the output electrical conductor (17) of the electron-multiplier device (10) is connected to the first storage unit (2).

9. The system (1) according to claim 8, wherein:
- the first storage unit (2) comprises:
- a first main capacitor (C1) including a positive terminal (P1) and a negative terminal (N1), which is connected to an electrical ground (M) of the storage system (1), and
- a first auxiliary capacitor (Aux1), including a positive terminal (P2) and a negative terminal (N2), which is connected to the electrical ground (M), a framework (32) of the first auxiliary capacitor (Aux1) being in electrostatic influence with a framework (22) of the first main capacitor (C1),
- the second storage unit (3) comprises:
- a second main capacitor (C2) including a positive terminal (P3) and a negative terminal (N3), which is connected to the electrical ground (M), and
- a second auxiliary capacitor (Aux2), including a positive terminal (P4) and a negative terminal (N4), which is connected to the electrical ground (M), a framework of the second auxiliary capacitor (Aux2) being in electrostatic influence with a framework of the second main capacitor (C2), and wherein
- in the first configuration of the storage system (1):
- the positive terminal (P3) of the second main capacitor (C2) is connected to the output terminal (S) of the storage system (1),
- the positive terminal (P1) of the first main capacitor (C1) is connected to the input electrical conductor (16) of the electron-multiplier device (10), and
- the output electrical conductor (17) of the electron-multiplier device (10) is connected to the positive terminal (P3) of the second auxiliary capacitor (Aux2), and
- in the second configuration of the storage system (1):
- the positive terminal (P1) of the first main capacitor (C1) is connected to the output terminal (S) of the storage system (1),
- the positive terminal (P3) of the second main capacitor (C2) is connected to the input electrical conductor (16) of the electron-multiplier device (10), and
- the output electrical conductor (17) of the electron-multiplier device (10) is connected to the positive terminal (P2) of the first auxiliary capacitor (Aux1).

10. The system (1) according to claim 9, wherein the switching system (4) is configured to:
- switch from the first configuration to the second configuration when an electrical voltage between the positive terminal (P3) and the negative terminal (N3) of the second main capacitor (C2) becomes lower than a predetermined threshold voltage, or when the intensity of an electrical current output by the positive terminal (P3) of the second main capacitor (C2) becomes lower than a predetermined threshold intensity, and to
- switch from the second configuration to the first configuration when an electrical voltage between the positive terminal (P1) and the negative terminal (N1) of the first main capacitor (C1) becomes lower than a predetermined threshold voltage, or when the intensity of an electrical current output by the positive terminal (P1) of the first main capacitor (C1) becomes lower than an predetermined threshold intensity.

11. The system (1) according to one of claims 9 or 10, wherein the first main capacitor (C1) and the second main capacitor (C2) each have a capacitance between 0.15 and 0.25 kilofarad.

12. The system (1) according to one of claims 9 to 11, further comprising a storage capacitor (C3) that includes a positive terminal (P5) and a negative terminal (N5) respectively connected to the output terminal (S) and to the electrical ground (M) of the storage system (1), the storage capacitor (C3) having a capacitance that is:
- higher than or equal to the sum of the capacitance of the first main capacitor (C1) and the capacitance of the first auxiliary capacitor (Aux1), and
- higher than or equal to the sum of the capacitance of the second main capacitor (C2) and the capacitance of the second auxiliary capacitor (Aux2).

13. The system (1) according to claim 12, wherein:
- in the first configuration of the storage system (1), the positive terminal (P5) of the storage capacitor (C3) is connected to the positive terminal (P2) of the first auxiliary capacitor (Aux1) to allow a transfer of electrical charges from the storage capacitor (C3) to the first auxiliary capacitor (Aux1), and wherein
- in the second configuration of the storage system (1), the positive terminal (P5) of the storage capacitor (C3) is connected to the positive terminal (P4) of the second auxiliary capacitor (Aux2) to allow a transfer of electrical charges from the storage capacitor (C3) to the second auxiliary capacitor (Aux2).

14. The system (1) according to one of claims 9 to 13, wherein the framework (32) of the first auxiliary capacitor (Aux1) that is in electrostatic influence with one of the frameworks of the first main capacitor (C1) is in contact with this framework (22) of the first main capacitor (C1) through an electrolyte layer (62).

15. The system (1) according to one of claims 9 to 14, wherein the first auxiliary capacitor (Aux1) and the first main capacitor (C1) respectively form two distinct elements, applied against each other along a surface of contact.
